# EUROPÄISCHE PATENTANMELDUNG

(11) **EP 2 657 211 A2**
(43) Veröffentlichungstag der Anmeldung: **30.10.2013**
(21) Anmeldenummer: 13002010.0
(22) Anmeldetag: 17.04.2013
(51) Int. Cl.: C04B 41/64

(54) **Verwendung von silanfunktionalisierten Präpolymeren in einer Formulierung zur Estrichreparatur**

(30) Priorität: 26.04.2012 DE 102012008486
(71) Anmelder: Bona GmbH Deutschland, 65549 Limburg an der Lahn (DE)
(72) Erfinder: Wickel, Holger, D-65594 Runkel (DE)
(74) Vertreter: Schweitzer, Klaus

(57) **Zusammenfassung**

Die Erfindung betrifft eine Formulierung beinhaltend ein silanfunktionalisiertes Präpolymer der Formel I 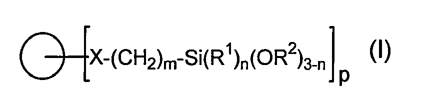 wobei
○
ein Polymer mit einem Molekulargewicht Mw von 1000 bis 50000, bevorzugt 1000 bis 10000 und besonders bevorzugt 1000 bis 5000 ist,
R¹
C₁-C₅-Alkyl oder C₆-C₁₀-Aryl, bevorzugt Methyl, Ethyl oder Phenyl,
R²
C₁-C₄-Alkyl, bevorzugt Methyl oder Ethyl und
X
-O- , -(CH₂)ₘ-O-, -O-CO-NR- , 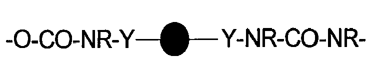 oder 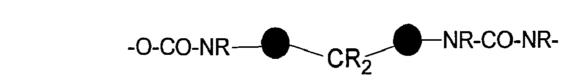 bedeutet, oder wobei X zusammen mit
R
zwei benachbarten C-Atomen des Rückgrads des Polymers○einen C₅ oder C₆-Ring bildet und wobei gleich oder verschieden ist und H, C₁-C₅-Alkyl, Phenyl oder den Rest eines Michael-Akzeptors bedeutet,
Y
gleich oder verschieden ist und lineares oder verzweigtes C₁-C₈-Alkylen (bevorzugt Methylen) oder eine Einfachbindung zwischen N und ● ist und
●
unsubstituiertes oder mit C₁-C₃-Alkyl, bevorzugt Methyl, 1-, 2- oder 3-fach substituiertes Phenylen, Naphtylen, Cyclohexylen oder C₄-C₁₀-n-Alkylen bedeutet

und
m
gleich oder verschieden ist und eine ganze Zahl von 1 bis 8, bevorzugt 1 bis 4, besonders bevorzugt 1 bis 3
n
eine ganze Zahl von 0 bis 2, bevorzugt 0 oder 1, besonders bevorzugt 0, und
p
eine ganze Zahl von 1 bis 50, bevorzugt 2 bis 4, besonders bevorzugt 2 bis 3
oder für den Fall, dass X -(CH₂)ₘ-O- ist oder X mit zwei benachbarten C-Atomen des Rückgrads des Polymers○einen C₅- oder C₆-Ring bildet, 1 bis 100, bevorzugt 5 bis 10 ist,

zur Estrichreparatur, insbesondere zur Verfüllung von Estrichrissen und Estrichscheinfugen.

## Beschreibung

Die Erfindung betrifft die Verwendung von bekannten silanfunktionalisierten Präpolymeren in Formulierungen zur Estrichreparatur, insbesondere zur Verfüllung von Estrichrissen und Estrichscheinfugen.

Estriche, z.B. in Form von so genannten "schwimmenden Estrichen", werden insbesondere in europäischen Ländern in Geschossböden von Bauwerken verlegt, um eine erste Isolierung (Lärm, Wärme, etc.) gegenüber der tragenden Struktur, z.B. einem Betonfußboden zu erreichen. Auf diesen Estrichen wird dann gewöhnlich der endgültige Bodenbelag (z.B. Fliesen, Parkett, Teppichboden, etc.) verlegt. Ein typischer Estrich besteht im Wesentlichen aus Sand, Bindemittel (z.B. Zement, Calciumsulfat) und Wasser, wobei Anteile und Zusammensetzung je nach Einsatzzweck (z.B. Industriebereich, Heimbereich etc.) variieren. Anorganisch gebundene Estriche zeigen beim Aushärten einen Schwund, weshalb die durchgehenden Verlegeflächen üblicherweise begrenzt werden, um unkontrollierte Riss- und Fugenbildung zu minimieren.

Vorhandene Risse und Scheinfugen müssen vor dem Verlegen des endgültigen Bodenbelags repariert, d.h. gefüllt und geglättet werden, wobei die Reparaturmasse eine mechanisch belastbare, kraftschlüssige Verbindung mit dem Estrich eingehen soll.

Bekannte gießfähige Massen zur Reparatur von Estrichen basieren z.B. auf ungesättigten Polyester-Harzen, Epoxidharzen, Acrylatharzen oder Silikatharzen. Bei diesen Produkten handelt es sich gewöhnlich um reaktive Zwei-Komponenten-Produkte, die vor der Verarbeitung gemischt werden müssen. Beispiele hierfür sind:

| Zusammensetzung | Bezeichnung | Hersteller |
|---|---|---|
| ungesättigtes PolyesterHarz | Bona R400 | Fa. Bona, Limburg (Deutschland) |
| | STAUF EGH-30 Blitzharz | Fa. Stauf Klebstoffwerk |
| | UZIN KR 521 | GmbH, Wilnsdorf (Deutschland) |
| | | Uzin Utz AG, Ulm (Deutschland) |
| Epoxidharz | UZIN KR 419 | Uzin Utz AG |
| Acrylatharz | UZIN KR 416 | Uzin Utz AG |
| Silikatharz | WAKOL PS 205 GIESHARZ | Fa. Wakol GmbH, Pirmasens (Deutschland). |

Mit solchen Reparaturmassen erreicht man grundsätzliche einen kraftschlüssigen Verbund. Alle diese Produkte zeichnen sich jedoch dadurch aus, dass der Anwender sie durch Vermischen von zwei Reaktivkomponenten kurz vor der Verfüllung des Estrichrisses herstellen muss, was als solches schon Nachteilig ist, weil es gewisse Umsicht und Erfahrung im Umgang mit diesen Stoffen erfordert. Ein wesentlich größerer Nachteil ist jedoch in den Einzelkomponenten als solche zu sehen, die allesamt als Gefahrstoffe eingestuft sind (Styrol, Dibenzoylperoxid, Bisphenol-A-Epichlorhydrin-Harz, Amine, Methyl-Methacrylat, Isomere und Homologe des Diphenylmethan-diisocyanat, Natriumsilikat). Diese können zu einer gesundheitlichen Gefährdung, Sensibilisierung und zu Allergien beim Verarbeiter führen. Mischt man die einzelnen Reaktivkomponenten nicht im richtigen Verhältnis miteinander oder vergisst gar eine Komponente ganz, so besteht die Gefahr, dass zumindest Teile des Bauwerks (Räume, Etagen) mit den Gefahrstoffen kontaminiert werden, welches eine teure Dekontaminierung bzw. Isolierung notwendig machen kann.

Auf dem Gebiet der Kleb- und Dichtstoffe sind weiterhin silanfunktionalisierte elastische Polymere bekannt (z.B. US-A-2003/0229192: wasserhärtbare Polyetherurethane mit reaktiven Silangruppen). Diese werden bestimmungsgemäß nur zum Verfüllen von Arbeitsfugen eigesetzt (Dichtmassen) und besitzen nur geringe Shore-A-Härten. Aus diesem Grund werden sie nicht zum Verfüllen von Estrichrissen und -scheinfugen verwendet.

In der EP-A-2 135 852 sind schließlich wasserhärtbare silanfunktionalisierte Polyether und Polyurethane als flächige Versiegelung und Wasserdampfsperre, insbesondere für noch feuchte Estriche beschrieben. Eine Eignung dieser Zusammensetzungen als Reparaturmasse für Estrichrisse und Estrichscheinfugen ist in der EP-A-2 135 852 jedoch nicht beschrieben und liegt auch vor dem Hintergrund ihrer Offenbarung nicht nahe, da die dort genannte Formulierung aus dem Bereich der weichelastischen Dichtmassen stammt.

### Aufgabe

Ziel der vorliegenden Erfindung ist es eine Zusammensetzung bereitzustellen, die zur Sanierung von Estrichrissen und -scheinfugen geeignet ist und deren Komponenten (Präpolymerkomponente und Härterkomponente) gleichzeitig keiner Einstufung als Gefahrstoff unterworfen sind. Vorzugsweise besitzen die ausgehärteten Sanierungsmassen Shorehärten von größer 40 Shore A, bevorzugt von größer 60 Shore A.

### Erfindung

Diese Aufgabe wird gelöst durch eine Formulierung beinhaltend ein silanfunktionalisiertes Präpolymer der Formel I 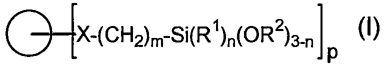 wobei
ein Polymer mit einem Molekulargewicht Mw von 1000 bis 50000, bevorzugt 1000 bis 10000 und besonders bevorzugt 1000 bis 5000 ist,
- R¹: C₁-C₅-Alkyl oder C₆-C₁₀-Aryl, bevorzugt Methyl, Ethyl oder Phenyl,
- R²: C₁-C₄-Alkyl, bevorzugt Methyl oder Ethyl und
- X: -O-, -(CH₂)ₘ-O-, -O-CO-NR-, 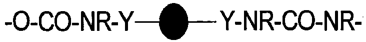 oder 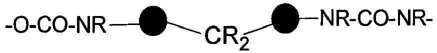 bedeutet, oder wobei X zusammen mit zwei benachbarten C-Atomen des Rückgrads des Polymers_{○}einen C₅ oder C₆-Ring bildet und wobei
- R: gleich oder verschieden ist und H, C₁-C₅-Alkyl, Phenyl oder den Rest eines Michael-Akzeptors bedeutet,
- Y: gleich oder verschieden ist und lineares oder verzweigtes C₁-C₈-Alkylen (bevorzugt Methylen) oder eine Einfachbindung zwischen N und ● ist und
- ●: unsubstituiertes oder mit C₁-C₃-Alkyl, bevorzugt Methyl, 1-, 2- oder 3-fach substituiertes Phenylen, Naphtylen, Cyclohexylen oder C₄-C₁₀-n-Alkylen bedeutet
und
- m: gleich oder verschieden ist und eine ganze Zahl von 1 bis 8, bevorzugt 1 bis 4, besonders bevorzugt 1 bis 3
- n: eine ganze Zahl von 0 bis 2, bevorzugt 0 oder 1, besonders bevorzugt 0, und
- p: eine ganze Zahl von 1 bis 50, bevorzugt 2 bis 4, besonders bevorzugt 2 bis 3 oder für den Fall, dass X -(CH₂)ₘ-O- ist oder X mit zwei benachbarten C-Atomen des Rückgrads des Polymers○einen C₅- oder C₆-Ring bildet, 1 bis 100, bevorzugt 5 bis 10 ist,
zur Estrichreparatur.

Bei dem Polymer○mit einem Molekulargewicht Mw von 1000 bis 50000, bevorzugt 1000 bis 10000 und besonders bevorzugt 1000 bis 5000 handelt es sich beispielsweise um Polyalkoxyalkylene bevorzugt um ein Polyalkylenglykol, wie Polyethylenglykol, Polypropylenglykol oder Polybutylenglykol, insbesondere um Polypropylenglykol. In diesen Fällen ist p gleich 2 oder 3.

Bei einem Michael-Akzeptor handelt es sich z.B. um eine α,β-ungesättigte Carbonylverbindung, wie α,β-ungesättigte Aldehyde, Ketone oder Ester, α,β-ungesättigte Nitrile oder Carbonsäureamide. Beispiele hierfür sind Acrylsäure-C₁-C₈-Alkylester, Methacrylsäure-C₁-C₈-Alkylester (s. z.B. US-A-4,067,844) Maleinsäureester, Fumarsäureester (s. z.B. EP-A-0 596 360) Der Rest des Michael-Akzeptors "R" entspricht dann dem in β-Stellung gebundenen (gesättigten) Rest des Michael-Akzeptors.

Beispiele für die erfindungsgemäß einsetzbaren silanfunktionalisierten Präpolymere sind:
- Polypropylenglykol (PPG), dessen OH-Endgruppen umgesetzt wurden mit Allylchlorid wobei die sich daraus ergebenden terminalen Doppelbindungen hydrosilyliert wurden. Solche Präpolymere sind kommerziell unter der Bezeichnung "Kaneka Silyl SAX®" (Kaneka Corp., Osaka, Japan) erhältlich und sind beispielsweise beschrieben in US 3971751, auf die hier ausdrücklich Bezug genommen wird;
- PPG, dessen OH-Endgruppen umgesetzt wurden mit Isocyanat-substituiertem Silan. Solche Präpolymere sind kommerziell unter der Bezeichnung "Wacker Geniosil® STP E" (Wacker Chemie AG, München, Deutschland) erhältlich und sind beispielsweise beschrieben in EP-A-1 535 940, auf die hier ausdrücklich Bezug genommen wird;
- PPG, dessen OH-Endgruppen umgesetzt wurden mit Diisocyanat und die sich daraus ergebenden terminalen Isocyanatgruppen mit Aminosilan umgesetzt wurden. Solche Präpolymere sind kommerziell unter der Bezeichnung "Bayer Desmoseal® SXP" (Bayer AG, Leverkusen, Deutschland) erhältlich. Ihre Herstellung ist beispielsweise beschrieben in W02011/069966 auf welche hier ausdrücklich Bezug genommen wird.
- Polymerketten mit seitenständigen Silangruppen (Formel I mit p = 1 bis 100, bevorzugt 5 bis 10). Solche Präpolymere sind kommerziell unter der Bezeichnung "Evonik Tegopac®" (EVONIK Tego Chemie GmbH, Essen, Deutschland) erhältlich und sind beispielsweise beschrieben in EP-A-2 093 244, auf die hier ausdrücklich Bezug genommen wird. Ebenfalls geeignet sind Copolymere mit Gamma-glycidoxypropyltrimethoxysilan, Gammaglycidoxypropyltriethoxysilan, Gamma-glycidoxypropylmethyldiethoxysilan, Beta-(3,4-epoxycyclohexyl)-ethyl trimethoxysilan, Beta-(3,4-epoxycyclohexyl)-ethyl triethoxysilan, die beispielsweise unter der Bezeichnung Silquest® A187, A1871, Silquest A186 oder Coatosil 1770 (Fa. Crompton, Middlebury, CT, U.S.A.) erhältlich sind.

Unter einer Estrichreparatur oder Sanierung wird die Verfüllung von oberflächlich sichtbaren Rissen und/oder Scheinfugen im Estrich verstanden, wobei durch die Reparaturmasse die sich gegenüberliegenden Bruchkanten wieder kraftschlüssig miteinander verbunden werden. Nach dem Abbinden der Reparaturmasse weist diese eine Shorehärte von größer 40 Shore A auf. Besonders vorteilhaft sind Reparaturmassen auf Basis von Verbindungen der Formel (I) mit den dort bevorzugten oder besonders bevorzugten Parametern, da diese nach dem Abbinden zu mechanisch besonders stabilen Massen aushärten, mit Shorehärten von größer 60 Shore A.

Die erfindungsgemäß zu verwendenden Präpolymere können prinzipiell als solche eingesetzt werden. Der zu reparierende Estrich enthält noch genügend Wasser, um das Präpolymer zu vernetzen. Zur Sicherstellung einer schnellen Vernetzung wird die Präpolymerkomponente aber gewöhnlich kurz vor der Anwendung mit dem Vernetzungsmittel (Härterkomponente) vermischt und die Mischung dann in die Estrichrisse bzw. -scheinfugen verfüllt. Als Vernetzungsmittel geeignet ist Wasser, gegebenenfalls unter Zusatz von Säuren oder Basen oder eines Verdünnungsmittels zur Regulierung der Aushärtegeschwindigkeit, welche mit der Topfzeit korreliert.

Wird vor Gebrauch das Anmischen der Präpolymerkomponente mit der Härterkomponente versehentlich vergessen, hat dies keine langanhaltende Geruchsbelästigung zur Folge, da das zur Aushärtung benötigte Wasser, unter Verlängerung des Aushärteprozesses, auch langsam aus der Umgebung aufgenommen werden kann.

Präpolymer- und Härterkomponente können übliche Additive wie Füllstoffe, Trockenmittel, Haftvermittler, Farbpigmente (Farbstoffe), Antioxidationsmittel, UV-Stabilisatoren, Rheologieadditive, Verdünnungsmittel, Katalysatoren, Konservierungsmittel, etc. enthalten. Diese sind dem Fachmann bekannt und beispielsweise auch in den oben genannten Dokumenten des Standes der Technik aufgeführt.

Als Füllstoffe eignen sich beispielsweise gemahlenes oder gefälltes Calciumcarbonat, Magnesiumcarbonat, Calciumsulfat, Bariumsulfat, Kaolin, Dolomit, Feldspat, Zeolith, Aluminiumhydroxid und Magnesiumhydroxid, etc., wobei diese Füllstoffe auch beispielsweise mit Silanen oder Fettsäuren oberflächenmodifiziert sein können. Es können eine oder mehrere verschiedene Füllstoffe verwendet werden. Füllstoffe werden gewöhnlich der jeweiligen Komponente (Präpolymer bzw. Härterkomponente) in Mengen von 0 bis 80 Gew.-%, bevorzugt 0 bis 60 Gew.-% zugegeben (bezogen auf die jeweilige Komponente). Kommerziell erhältliche Füllstoffe sind beispielsweise Omyacarb® 10BG (Omya, Schweiz), Siliplast® 908 (Amberger Kaolinwerke, Deutschland), Apyral® 22 (Nabaltec, Deutschland).

Als Pigmente können sowohl anorganische Pigmente wie Ruß, Eisenoxid, Ultramarin, oder Zinkoxid, als auch organische Farbstoffe wie Anthrachinone, Acridine, Phthalocyanine, Indophenole, etc. eingesetzt werden. Es können ein oder mehrere verschiedene Pigmente oder Pigmentpräparationen verwendet werden. Die Gesamtmenge an Pigment ist nicht kritisch. Die Pigmente werden gewöhnlich der jeweiligen Komponente (Präpolymer bzw. Härterkomponente) in Mengen von 0 bis 30 Gew.-%, bevorzugt 0 bis 20 Gew.-% zugegeben (bezogen auf die jeweilige Komponente). Kommerziell erhältliche Pigmente und Pigmentpräparationen bzw. Farbstoffe sind beispielsweise Bayferrox® (Lanxess, Deutschland), Hostatint® (Clariant, Schweiz).

Als Antioxidationsmittel bzw. UV-Stabilisatoren eignen sich beispielsweise sterisch gehinderte Phenole, Benzophenone, Benzotriazole, Oxalanilide, Phenyltriazine, etc. Solche Antioxidationsmittel bzw. UV-Stabilisatoren sind beispielsweise erhältlich unter den Bezeichnungen Irganox® 1076, Tinuvin® 292, Tinuvin® 327, Tinuvin® 770 (Ciba, Deutschland). Es können eine oder mehrere verschiedene Antioxidationsmittel bzw. UV-Stabilisatoren verwendet werden. Die Gesamtmenge an Antioxidationsmittel bzw. UV-Stabilisator ist nicht kritisch. Antioxidationsmittel bzw. UV-Stabilisatoren werden gewöhnlich der jeweiligen Komponente (Präpolymer bzw. Härterkomponente) in Mengen von 0 bis 5 Gew.-%, bevorzugt 0 bis 2 Gew.-% zugegeben (bezogen auf die jeweilige Komponente).

Als Trockenmittel eignen sich beispielsweise Alkylsilane, Aminosilane oder Vinylsilane. Es können eine oder mehrere verschiedene Trockenmittel verwendet werden. Die Gesamtmenge an Trockenmittel ist nicht kritisch. Trockenmittel werden gewöhnlich der jeweiligen Komponente (Präpolymer bzw. Härterkomponente) in Mengen von 1 bis 10 Gew.-%, bevorzugt 1 bis 5 Gew.-% zugegeben (bezogen auf die jeweilige Komponente). Kommerziell erhältliche Trockenmittel sind beispielsweise Dynasylan® VTMO, Dynasylan® OCTEO, Dynasylan® AMMO (Evonik, Deustchland).

Als Haftvermittler eignen sich beispielsweise Aminosilane oder Epoxysilane. Es können eine oder mehrere verschiedene Haftvermittler verwendet werden. Die Gesamtmenge an Haftvermittler ist nicht kritisch. Haftvermittlerwerden gewöhnlich der jeweiligen Komponente (Präpolymer bzw. Härterkomponente) in Mengen von 1 bis 10 Gew.-%, bevorzugt 1 bis 5 Gew.-% zugegeben (bezogen auf die jeweilige Komponente). Kommerziell erhältliche Haftvermittler sind beispielsweise Dynasylan® AMMO, Dynasylan® GLYMO (Evonik, Deutschland).

Als Rheologieadditiv eignen sich beispielsweise pyrogene Kieselsäuren, gefällte Kieselsäuren, Schichtsilikate, Amidwachse, Rizinussölderivate, Celulloseether, Polyurethanverdicker oder Acrylatverdicker, etc. Es können eine oder mehrere verschiedene Rheologieadditive verwendet werden. Die Gesamtmenge an Rheologieadditiv ist nicht kritisch. Rheologieadditive werden gewöhnlich der jeweiligen Komponente (Präpolymer bzw. Härterkomponente) in Mengen von 0 bis 15 Gew.-%, bevorzugt 0 bis 10 Gew.-% zugegeben (bezogen auf die jeweilige Komponente). Kommerziell erhältliche Rheologieadditive sind beispielsweise Cab-O-Sil® TS720, Cab-O-Sil® LM 150 (Cabot, Deutschland).

Als Verdünnungsmittel eignen sich beispielsweise Glycerin, Polyole und Polyether, Phthalate, Adipate, Benzoate, etc. Es können ein oder mehrere verschiedene Verdünnungsmittel verwendet werden. Die Gesamtmenge an Verdünnungsmittel ist nicht kritisch. Verdünnungsmittel werden gewöhnlich der jeweiligen Komponente (Präpolymer oder Härterkomponente) in Mengen von 0 bis 95 Gew.-%, bevorzugt 0 bis 80 Gew.-% zugegeben (bezogen auf die jeweilige Komponente). Kommerziell erhältliche Verdünnungsmittel sind beispielsweise Palatinol N (BASF, Deutschland), Acclaim Polyol 2200 (Bayer Material Science, Deutschland).

Als Konservierungsmittel für die wasserhaltige Komponente eignen sich beispielsweise Sorbinsäure bzw. Sorbate, Benzoesäure, bzw. Ester der p-Hydroxybenzoesäure, Phosphate, Glykole, Hexamethylentetramin, Ethylendiaminteraessigsäure (EDTA), Isothiazolon-Derivate, etc. Es können eine oder mehrere verschiedene Konservierungsmittel verwendet werden. Die Gesamtmenge an Konservierungsmittel ist nicht kritisch. Konservierungsmittel werden gewöhnlich der Härterkomponente in Mengen von 0 bis 2 Gew.-%, bevorzugt 0 bis 1 Gew.-% zugegeben.

Als Katalysator für die Vernetzungs- und Aushärtungsreaktion, eignen sich beispielsweise Dibutylzinndilaurat, Dioctylzinndilaurat, Titan-(IV)-isopropanolat, Titan-(IV)-acetylacetonat, Eisen-(III)-acetylacetonat, Aluminium triisopropanolat, 1,4-Diazabicyclo[2.2.2]octan, 1,8-Diazabicyclo[5.4.0]undecen-7, 1,5-Diazabicyclo[4.3.0]nonen-5, Essigsäure, Methansulfonsäure, p-Toluolsulfonsäure, etc. Es können ein oder mehrere verschiedene Katalysatoren verwendet werden. Die Gesamtmenge an Katalysator ist nicht kritisch. Katalysatoren werden gewöhnlich der jeweiligen Komponente (Präpolymer oder Härterkomponente) in Mengen von 0 bis 2 Gew.-%, bevorzugt 0 bis 1 Gew.-% zugegeben (bezogen auf die jeweilige Komponente).

Die Präpolymerkomponenten können nach üblichen Verfahren, beispielsweise durch einfaches Vermischen unter Unterdruck (Vakuumdissolver), hergestellt und unter Normaldruck abgepackt werden.

Zweckmäßigerweise werden die beiden Komponenten Präpolymer und Härter getrennt in zwei verschiedenen Behältern aufbewahrt, die als Gebinde gelagert und zur Verfügung gestellt werden können. Ihr Inhalt wird vor Gebrauch miteinander vermischt. Dies kann auch selbsttätig durch eine Mischdüse beim Herauspressen aus einer ZweiKomponenten-Kartusche erfolgen. Das Präpolymer kann jedoch auch ohne Härterkomponente angewendet werden, da die betroffenen Estriche ausreichend Sorptionswasser enthalten.

In der Mischung beträgt der Anteil der Präpolymerkomponente 70 bis 100 Gew.-%, bevorzugt 85 bis 100 Gew.-% und der Anteil der Härterkomponente 0 bis 30 Gew.-%, bevorzugt 0 bis 15 Gew.-%.

Mit der Mischung aus Präpolymer und Härterkomponente, gegebenenfalls mit der Präpolymerkomponente alleine, werden dann die Risse und/oder Scheinfugen des zu sanierenden Estrichs vergossen. Hierdurch werden die sich gegenüberliegenden Bruchkanten wieder kraftschlüssig miteinander verbunden.

### Beispiel

Es wurden zwei getrennte Komponenten hergestellt. Komponente A, die das erfindungsgemäß ausgewählte Präpolymer enthielt und Komponente B, mit Wasser als Härterreagenz.

Als Probeestrichblock wurde eine Betonplatte mit den Maßen 40 cm • 40 cm • 5 cm und einer Masse von 18 kg der Festigkeitsklasse C30/37 benutzt. Zwei dieser Platten wurden mit einer Fuge von 0,5 cm aneinandergelegt und diese Fuge dann mit den unmittelbar vor der Anwendung gemischten Komponenten A und B vergossen. Der so präparierte Prüfkörper wurde 24 Std. bei Raumtemperatur gelagert, anschließend vertikal aufgehängt und die Veränderung der Fuge über einen Zeitraum von 60 Tagen verfolgt. Dabei zeigte sich unter dem Einfluss der konstant einwirkenden Gewichtsraft keine Veränderung des Fugenbildes. Bei mechanischer Beanspruchung des horizontal gelagerten Prüfkörpers bis zur Zerstörung findet der Bruch regelmäßig im Beton statt.

## Patentansprüche

1. Verwendung einer Formulierung beinhaltend ein silanfunktionalisiertes Präpolymer der Formel I 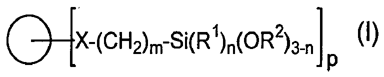 wobei
○ ein Polymer mit einem Molekulargewicht Mw von 1000 bis 50000, bevorzugt 1000 bis 10000 und besonders bevorzugt 1000 bis 5000 ist,
R¹ C₁-C₅-Alkyl oder C₆-C₁₀-Aryl, bevorzugt Methyl, Ethyl oder Phenyl,
R² C₁-C₄-Alkyl, bevorzugt Methyl oder Ethyl und X -O-, -(CH₂)ₘ-O-, -O-CO-NR-, 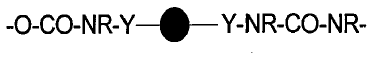 oder 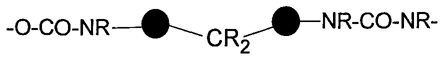 bedeutet, oder wobei X zusammen mit zwei benachbarten C-Atomen des Rückgrads des Polymers○einen C₅ oder C₆-Ring bildet und wobei
R gleich oder verschieden ist und H, C₁-C₅-Alkyl, Phenyl oder den Rest eines Michael-Akzeptors bedeutet,
Y gleich oder verschieden ist und lineares oder verzweigtes C₁-C₈-Alkylen (bevorzugt Methylen) oder eine Einfachbindung zwischen N und ● ist und
● unsubstituiertes oder mit C₁-C₃-Alkyl, bevorzugt Methyl, 1-, 2- oder 3-fach substituiertes Phenylen, Naphtylen, Cyclohexylen oder C₄-C₁₀-n-Alkylen bedeutet
und
m gleich oder verschieden ist und eine ganze Zahl von 1 bis 8, bevorzugt 1 bis 4, besonders bevorzugt 1 bis 3
n eine ganze Zahl von 0 bis 2, bevorzugt 0 oder 1, besonders bevorzugt 0, und
p eine ganze Zahl von 1 bis 50, bevorzugt 2 bis 4, besonders bevorzugt 2 bis 3 oder für den Fall, dass X -(CH₂)ₘ-O- ist oder X mit zwei benachbarten C-Atomen des Rückgrads des Polymers○einen C₅- oder C₆-Ring bildet, 1 bis 100, bevorzugt 5 bis 10 ist,
zur Estrichreparatur.

2. Verwendung nach Anspruch 1, **dadurch gekennzeichnet, dass** das Molekulargewicht Mw 1000 bis 10000, bevorzugt 1000 bis 5000 ist.

3. Verwendung nach Anspruch 1 oder 2, **dadurch gekennzeichnet, dass** R¹ Methyl, Ethyl oder Phenyl ist.

4. Verwendung nach einem der Ansprüche 1 bis 3, **dadurch gekennzeichnet, dass** R² Methyl oder Ethyl ist.

5. Verwendung nach einem der Ansprüche 1 bis 4, **dadurch gekennzeichnet, dass** m 1 bis 4, bevorzugt 1 bis 3 ist.

6. Verwendung nach einem der Ansprüche 1 bis 5, **dadurch gekennzeichnet, dass** n 0 oder 1, bevorzugt 0 ist.

7. Verwendung nach einem der Ansprüche 1 bis 6, **dadurch gekennzeichnet, dass** p 2 bis 4, bevorzugt 2 bis 3 ist oder, für den Fall, dass X -(CH₂)ₘ-O- ist oder X mit zwei benachbarten C-Atomen des Rückgrads des Polymers ○einen C₅-oder C₆-Ring bildet, 1 bis 100, bevorzugt 5 bis 10 ist.

8. Verwendung nach einem der Ansprüche 1 bis 7, **dadurch gekennzeichnet, dass** zusätzlich ein Vernetzungsmittel verwendet wird.

9. Verwendung nach Anspruch 8, **dadurch gekennzeichnet, dass** das Vernetzungsmittel Wasser enthält.

10. Verwendung nach Anspruch 8 oder 9, **dadurch gekennzeichnet, dass** das Präpolymer und das Vernetzungsmittel in zwei getrennten Behältern aufbewahrt werden, die als Gebinde zur Verfügung gestellt werden.

11. Verwendung nach einem der Ansprüche 1 bis 10, **dadurch gekennzeichnet, dass** zusätzlich ein oder mehrere Additive verwendet werden.

12. Verwendung nach Anspruch 11, **dadurch gekennzeichnet, dass** das Additiv ausgewählt wird aus der Gruppe bestehend aus: Füllstoff, Trockenmittel, Haftvermittler, Farbpigment, Farbstoff, Antioxidationsmittel, UV-Stabilisator, Rheologieadditiv, Verdünnungsmittel, Katalysator, Konservierungsmittel und Mischungen aus zwei oder mehreren gleichen oder verschiedenen dieser Stoffe.
